# EUROPÄISCHE PATENTSCHRIFT

(11) **EP 2 681 827 B1**
(45) Veröffentlichungstag und Bekanntmachung des Hinweises auf die Patenterteilung: **02.09.2015**
(21) Anmeldenummer: 12700047.9
(22) Anmeldetag: 09.01.2012
(51) Int. Cl.: H02K 1/27, H02K 29/03

(54) **ELEKTRISCHE MASCHINE MIT EINEM ROTOR MIT REDUZIERTEM RASTMOMENT**
ELECTRICAL MACHINE WITH A ROTOR WITH REDUCED COGGING TORQUE
MACHINE ÉLECTRIQUE AVEC UN ROTOR AVEC COUPLE DE DÉTENTE RÉDUIT

(30) Priorität: 02.03.2011 DE 102011004950
(43) Veröffentlichungstag der Anmeldung: 08.01.2014
(73) Patentinhaber: Robert Bosch GmbH, 70442 Stuttgart (DE)
(72) Erfinder: WILHARM, Torsten, 77833 Ottersweier (DE)
(86) Internationale Anmeldenummer: PCT/EP2012/050244
(87) Internationale Veröffentlichungsnummer: WO 2012/116853

(56) Entgegenhaltungen:
- EP-A1- 0 307 706
- WO-A1-2007/083724
- US-A1- 2005 275 301

## Beschreibung

### Stand der Technik

Die vorliegende Erfindung betrifft einen Magneten für einen Rotor einer elektrischen Maschine, der ein erstes Ende sowie ein zweites Ende aufweist, und der eine Magnetisierung aufweist. Die vorliegende Erfindung betrifft weiterhin einen Rotor für eine elektrische Maschine, mit zumindest zwei erfindungsgemäßen Magneten sowie eine elektrische Maschine mit einem solchen Rotor.

In dauermagneterregten elektrischen Maschinen wird das Erregerfeld mittels Dauermagnete erzeugt. Solche Maschinen weisen im Betrieb eine Momentenwelligkeit auf, die unter anderem durch Rastmomente hervorgerufen ist, welche an definierten Drehwinkelpositionen des Rotors auftreten. Im Ruhezustand ruht der Rotor einer solchen elektrischen Maschine in diesen Drehwinkelpositionen. Hervorgerufen sind die Rastmomente durch die von dem Erregerfeld bewirkte, drehwinkelabhängig differierende Anziehungskraft zwischen den Polzähnen und den Dauermagneten des Rotors.

In solchen elektrischen Maschinen entspricht die Anzahl der Pole der Anzahl der Dauermagnete. Dafür werden beispielsweise Magnete in radialer Richtung aufmagnetisiert, und zwar entweder so, dass die magnetischen Feldlinien vom Rotor zum Stator verlaufen, so dass der magnetische Nordpol dem Stator zugewandt ist, oder umgekehrt, so dass der magnetische Südpol dem Stator zugewandt ist. Dann werden abwechselnd Magnete mit entgegen gesetzt gerichteten magnetischen Feldlinien am Rotor angeordnet.

Die Druckschrift WO 2007/083724 A1 offenbart eine elektrische Maschine mit einem Rotor, an dessen Außenumfang Permantentmagnete angeordnet sind, die an ihren gegenüberliegenden Enden entgegen gesetzt polarisiert sind. Dadurch kann die Anzahl der Magnete halbiert werden.

Die EP 0 307 706 A1 schlägt vor, den Aufwand für die Bearbeitung und die Montage der Magnetanordnung einer elektrichen Maschine durch eine Magnetisierung der Magnete zu verringern, durch die die Polteilung die Magnete übergreift. Dadurch ist die Anzahl der Pole kleiner als die Anzahl der Magnete der Magnetanordnung. Und die Druckschrift US 2005/0275301 A1 schlägt vor, die durch Resonanzen des Stators in diesem verursachte Vibration zu unterdrücken, indem die magnetische Polarität in zumindest einem der Magnete der Stators wechselt. Bei beiden Druckschriften weist daher zumindest ein Magnet entgegen gesetzte Pole auf.

Um die Momentenwelligkeit zu reduzieren, ist es bekannt, den Rotor über seine axiale Länge zu schrägen. Dass heißt der Rotor wird aus mehreren axial hintereinander angeordneten Rotorsegmenten gebildet, die in Drehwinkelrichtung zueinander versetzt angeordnet sind, so dass auch die Rastmomente der Rotorsegmente in Drehwinkelrichtung zueinander versetzt sind. Dadurch treten zwar mehr aber dafür geringere Rastmomente an mehr Drehwinkelpositionen axial versetzt zueinander auf. Die Momentenwelligkeit eines solchen geschrägten Rotors ist im Vergleich zu einem ungeschrägten Rotor deutlich reduziert. Das Schrägen des Rotors ist aber in der Herstellung verhältnismäßig aufwendig und teuer.

### Offenbarung der Erfindung

Aufgabe der vorliegenden Erfindung ist es daher, eine elektrische Maschine sowie einen Rotor für eine elektrische Maschine zu schaffen, der im Vergleich zu einem geschrägten Rotor derselben Polzahl eine verringerte Momentenwelligkeit aufweist, und kostengünstiger und weniger aufwändig herstellbar ist.

Die Aufgabe wird gelöst mit einem Rotor für eine elektrische Maschine mit zumindest zwei Magneten gemäß Anspruch 1.

In einer bevorzugten Ausführungsform nimmt die Magnetisierung des Magneten von dem ersten und/oder dem zweiten Ende des Magneten zur Mittellinie hin ab.

Der Betrag der Magnetisierung ist in dem Bereich zwischen den Polen des Magneten daher zumindest verringert oder der Magnet weist in diesem Bereich zumindest teilweise keine Magnetisierung auf, so dass die räumliche Verteilung des durch die Magnetisierung verursachten Magnetfeldes verändert und insbesondere in dem Bereich geschwächt ist. Die durch die verringerte Magnetisierung verursachte Anziehungskraft für magnetische Materialien ist in dem Bereich des Magneten dementsprechend verringert.

Bevorzugt ist der Magnet schalenförmig oder kreisringsegmentförmig ausgebildet. Eine ihn begrenzende Außenfläche verläuft am ersten und zweiten Ende daher bevorzugt jeweils radial zu einer Achse, insbesondere der Rotorachse eines Rotors, in dem der Magnet vorgesehen ist. Die die beiden Enden verbindende Außenfläche verläuft daher bevorzugt konzentrisch zu der Achse, insbesondere der Rotorachse.

Der erfindungsgemäße Rotor weist nicht nur zwischen den Magneten, sondern auch jeweils in den Bereichen zwischen dem ersten und zweiten Ende der Magneten eine zumindest verringerte oder keine Magnetisierung auf, so dass nicht nur zwischen den Magneten, sondern auch jeweils in diesem Bereich die durch die Magnetisierung verursachte Anziehungskraft verringert ist. Ein Rotor mit erfindungsgemäßen Magneten weist daher ein geringeres Rastmoment auf. Daher ist die Momentenwelligkeit eines Rotors mit erfindungsgemäßen Magneten verringert.

Die Magnete sind erfindungsgemäß so angeordnet, dass sie an ihren zueinander benachbarten Enden gleichgerichtete magnetische Pole aufweisen. Dadurch ändert sich die Anzahl der Pole des Rotors im Vergleich zu einem herkömmlichen Rotor mit derselben Anzahl Magnete nicht. Die Anzahl der Pole des Rotors beträgt bevorzugt ein Vielfaches von zwei, besonders bevorzugt vier.

Erfindungsgemäß ist eine Lücke zwischen zwei benachbarten Magneten unmagnetisch vorgesehen, insbesondere als Luftspalt.

Die Aufgabe wird weiterhin gelöst mit einer elektrischen Maschine mit einem Rotor mit zumindest zwei erfindungsgemäßen Magneten. Die elektrische Maschine weist im Vergleich zu einer elektrischen Maschine mit einem Rotor mit herkömmlichen Magneten eine geringere Momentenwelligkeit auf.

Es ist bevorzugt, dass die elektrische Maschine einen Stator mit Polzähnen aufweist, wobei die Anzahl ihrer Polzähne ein Vielfaches der Anzahl ihrer Wicklungsstränge ist.

Im Folgenden wird die Erfindung anhand von Figuren beschrieben. Die Figuren sind lediglich beispielhaft und schränken den allgemeinen Erfindungsgedanken nicht ein.
- **Fig. 1**: zeigt in **(a)** einen Magneten nach dem Stand der Technik und in **(b)** einen erfindungsgemäßen Magneten,
- **Fig. 2**: zeigt in **(a)** einen Querschnitt durch eine elektrische Maschine, in **(b)** die elektrische Maschine der **Fig. 2(a)** mit Magneten nach dem Stand der Technik und in **(c)** die elektrische Maschine der **Fig. 2(a)** mit erfindungsgemäßen Magneten.

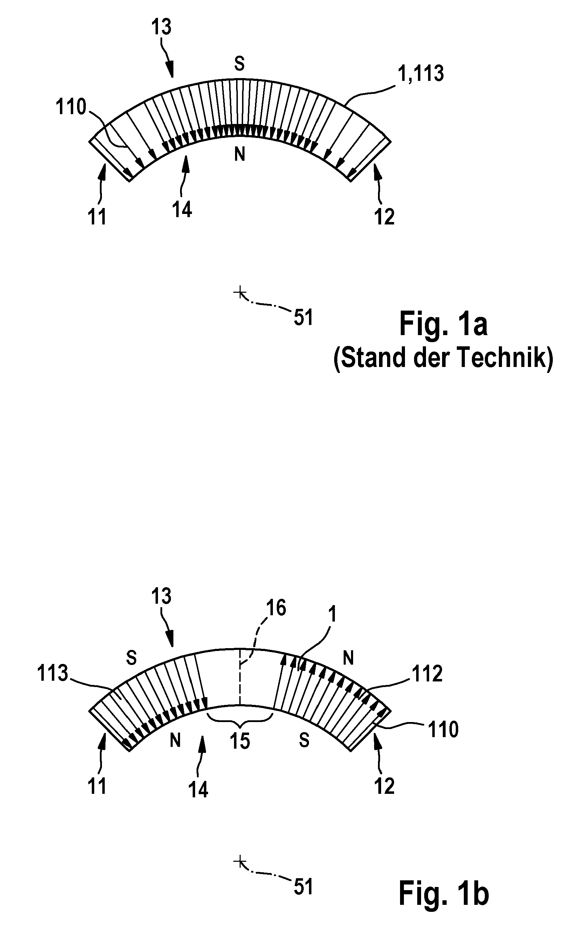

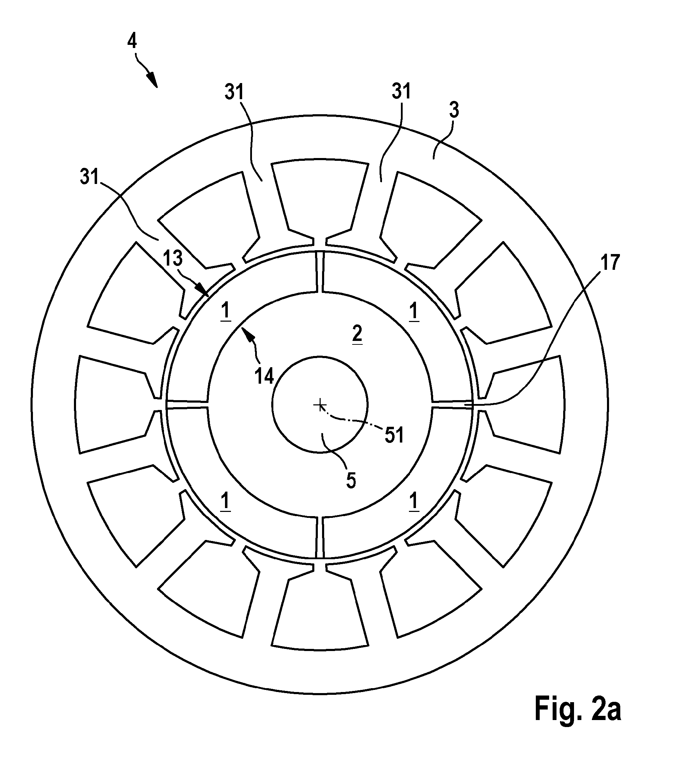

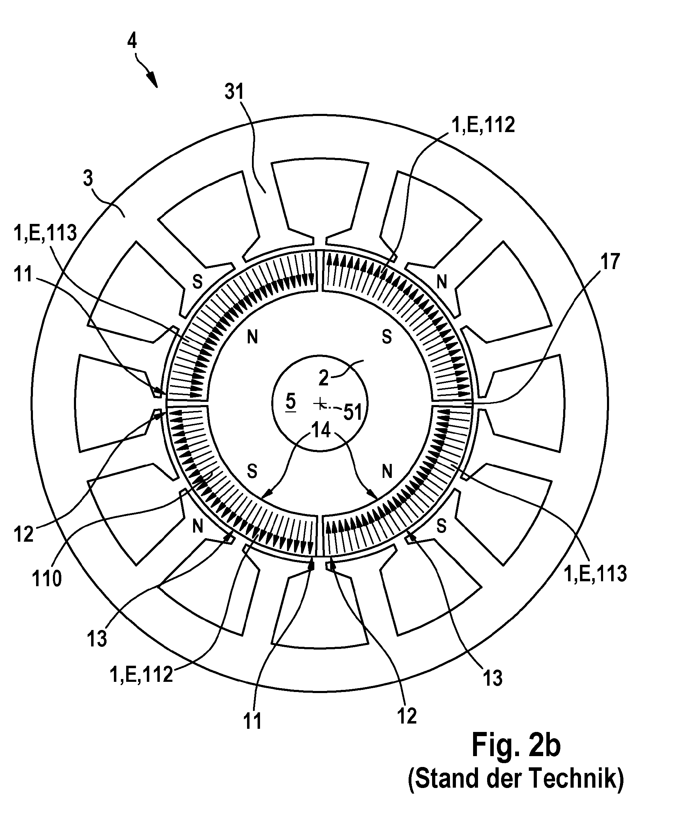

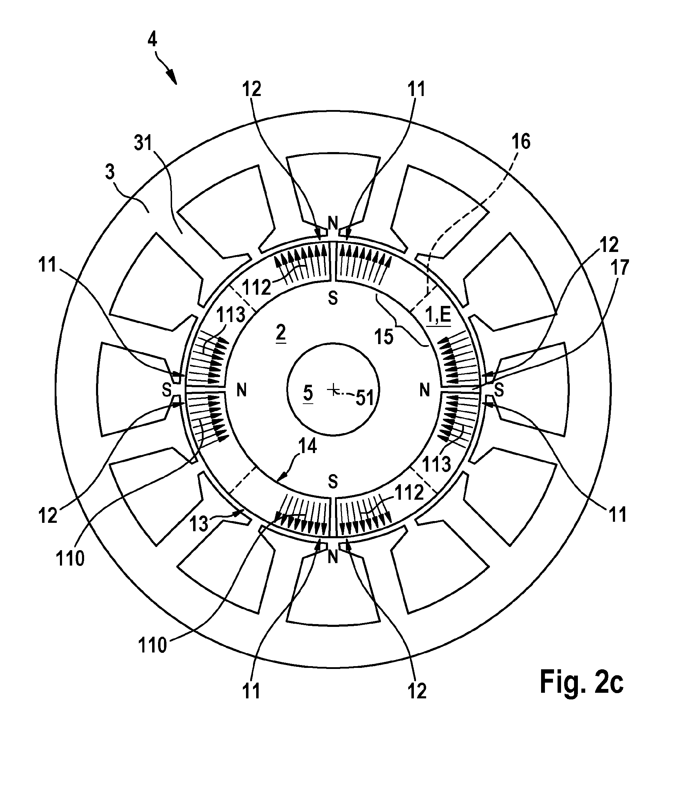

**Fig. 1 (a)** zeigt einen Magneten 1 nach dem Stand der Technik. Der Magnet 1 weist ein erstes Ende 11 und ein zweites Ende 12 auf. Er ist zu einer hier beispielhaft gezeigten Rotorachse 51 konzentrisch angeordnet und weist eine Magnetisierung auf, die hier durch Pfeile 110 gezeigt ist, und die radial zur Rotorachse 51 von einer der Rotorachse 51 abgewandten Seite 13 zu einer der Rotorachse 51 zugewandten Seite 14 des Magneten 1 verläuft. Dieser Magnet 1 weist daher an seiner der Rotorachse 51 abgewandten Seite 13 einen magnetischen Südpol S und an der gegenüberliegenden, der Rotorachse 51 zugewandten Seite 14 einen magnetischen Nordpol N auf. Um die Rastmomente in einem Rotor 2 (s. **Fig. 2**) mit diesem Magneten 1 zu verringern, nimmt Stärke der Magnetisierung 110 zum ersten und zum zweiten Ende 11, 12 des Magneten 1 hin ab, was hier durch eine geringere Pfeildichte gezeigt ist.

Weiterhin zeigt **Fig. 1 (b)** einen erfindungsgemäßen Magneten 1. Auch dieser Magnet 1 weist eine zu einer hier ebenfalls beispielhaft gezeigten Rotorachse 51 konzentrische Form auf, mit einer der Rotorachse 51 zugewandten Seite 14 und einer der Rotorachse 51 abgewandten Seite 13 und mit einem ersten und einem zweiten Ende 11, 12. Weiterhin weist auch dieser Magnet 1 eine Magnetisierung 110 in radialer Richtung zur Rotorachse 51 auf.

Im Gegensatz zum Stand der Technik verläuft die Magnetisierung 110 aber an dem ersten Ende 11 von der der Rotorachse 51 abgewandten Seite 51 zu der der Rotorachse 51 zugewandten Seite 14 des Magneten 1, und an dem zweiten Ende 12 umgekehrt, so dass am ersten Ende 11 der magnetische Südpol S an der der Rotorachse 51 abgewandten Seite 13 und der magnetische Nordpol N an der der Rotorachse 51 zugewandten Seite 14 vorgesehen ist, und so dass weiterhin der magnetische Südpol S am zweiten Ende 12 an der der Rotorachse 51 zugewandten Seite 14 und der magnetischen Nordpol N an der der Rotorachse 51 abgewandten Seite 13 vorgesehen ist. Der hier gezeigte Magnet 1 weist daher zwei entgegen gesetzt gerichtete Pole 112, 113 auf.

Zwischen den beiden Polen 112, 113 ist ein Bereich 15 vorgesehen, in dem der Magnet 1 nicht magnetisiert ist. Der Bereich 15 ist symmetrisch zu einer Mittellinie 16 vorgesehen.

**Fig. 2 (a)** zeigt schematisch einen Querschnitt durch eine elektrische Maschine 4 mit einem Stator 3 und einem Rotor 2. Am Stator 3 sind Polzähne 31 vorgesehen. Die üblicherweise an den Polzähnen 31 vorgesehenen Statorwicklungen sind hier der Übersichtlichkeit halber nicht gezeigt. Im Rotor 2 sind Magnete 1 vorgesehen. Der hier gezeigte Rotor 2 weist vier Magnete 1 und pro Magnet 1 drei Polzähne 31 auf, also insgesamt zwölf Polzähne 31.

Der Rotor 2 ist drehfest um eine Rotorwelle 5 angeordnet, die um eine Rotorachse 51 drehbar vorgesehen ist. Außerdem sind die Scheibemagnete 1 kreisringsegmentförmig ausgebildet, so dass sie konzentrisch um die Rotorachse 51 vorgesehen sind. Zwischen zwei benachbarten Magneten 1 ist jeweils eine Lücke 17 vorgesehen.

**Fig. 2 (b)** zeigt die elektrische Maschine 4 der **Fig. 2 (a)** mit Magneten 1 gemäß dem Stand der Technik. Im Gegensatz zu den Magneten 1 der **Fig. 1 (a)** weisen die hier gezeigten Magnete 1 eine über den gesamten Magnet 1 jeweils gleichbleibend starke Magnetisierung 110 auf, was durch den gleichbleibenden Abstand zwischen den die Magnetisierung 110 zeigenden Pfeilen dargestellt ist. Jeder der Magnete 1 bildet im Einbauzustand E im Rotor 2 einen Pol 112, 113, wobei immer entgegen gesetzt gerichtete Pole 112, 113 einander benachbart um die Rotorachse 51 angeordnet sind.

Die Magnete 1 sind zumindest geringfügig voneinander beabstandet, so dass eine Lücke 17 zwischen den Magneten 1 vorgesehen ist, die bevorzugt als Luftspalt ausgebildet ist. In der hier gezeigten Anordnung des Rotors 2 relativ zum Stator 3 ist das Rastmoment besonders hoch.

**Fig. 2 (c)** zeigt die elektrische Maschine 4 der **Fig. 2 (a)** mit den erfindungsgemäßen vier Magneten 1 der **Fig. 1 (b)****.** Da die erfindungsgemäßen Magnete 1 an ihren Enden 11, 12 jeweils eine entgegen gesetzt gerichtete Magnetisierung 110 aufweisen, sind sie in dem Rotor 2 immer so zueinander angeordnet, dass ihre Magnetisierung 110 an ihren einander zugewandten Enden 11, 12 gleich gerichtet ist. Dadurch bilden die einander zugewandten Enden 11, 12 benachbarter Magnete 1 im Einbauzustand E gemeinsam einen Pol 112, 113 des Rotors 2. Im Einbauzustand E im Rotor 2 bleibt die Anzahl der Pole 112, 113 daher gleich der Anzahl der Magnete 1, obwohl jeder Magnet 1 für sich zwei entgegen gesetzt gerichtete Pole 112, 113 (s. **Fig. 1 (b)****)** aufweist.

Die Magnete 1 sind analog dem Rotor der **Fig. 2 (b)** ebenfalls zumindest geringfügig voneinander beabstandet, so dass die Stärke des magnetischen Feldes 111 in der Lücke 17 zwischen den Magneten 1 geschwächt ist. Aber im Gegensatz zu dem Rotor der **Fig. 2 (b)** weist jeder der Magnete 1 in dem Rotor der **Fig. 2 (c)** den in **Fig. 1 (b)** bereits beschriebenen Bereich 15 ohne Magnetisierung 110 auf. Daher ist auch die Anziehungskraft zwischen den Polzähnen 31 und den Magneten 1 in diesem Bereich 15 reduziert. Insgesamt ist die Anzahl der Magnetisierungslücken im Vergleich zur elektrischen Maschine der **Fig. 2 (b)** doppelt so groß. Der daraus resultierende, veränderte Verlauf der magnetischen Feldlinien führt zu verringerten Rastmomenten und somit zu einer geringeren Momentenwelligkeit der elektrischen Maschine.

## Patentansprüche

1. Rotor (2) für eine elektrische Maschine (4) mit zumindest zwei Magneten (1), die jeweils ein erstes Ende (11) sowie ein zweites Ende (12) aufweisen, und die eine Magnetisierung (110) aufweisen, wobei ihre Magnetisierung (110) an ihrem ersten Ende (11) ihrer Magnetisierung (110) an ihrem zweiten Ende (12) entgegengerichtet ist, so dass die Magnete jeweils zwei einander entgegen gesetzt gerichtete magnetische Pole (112, 113) bilden, wobei die Magnetisierung (110) der Magneten (1) jeweils in einem Bereich (15) zwischen dem ersten Ende (11) und dem zweiten Ende (12) zumindest geschwächt ist, oder die Magnete (1) in dem Bereich (15) keine Magnetisierung (110) aufweisen, und wobei eine Lücke (17) zwischen zwei benachbarten Magneten (1) unmagnetisch vorgesehen ist,
**dadurch gekennzeichnet, dass**
die Magnete (1) so angeordnet sind, dass sie an ihren zueinander benachbarten Enden (11, 12) gleichgerichtete magnetische Pole (112, 113) aufweisen.

2. Rotor (2) nach Anspruch 1, **dadurch gekennzeichnet, dass** die Magnetisierung (110) der Magnete (1) ausgehend von dem ersten Ende (11) und/oder von dem zweiten Ende (12) in Richtung des Bereiches (15) jeweils abnimmt.

3. Rotor (2) nach einem der vorherigen Ansprüche, **dadurch gekennzeichnet, dass** seine Polzahl ein Vielfaches von zwei beträgt, insbesondere vier.

4. Rotor (2) nach einem der vorherigen Ansprüche, **dadurch gekennzeichnet, dass** die Lücke (17) als Luftspalt ausgebildet ist.

5. Elektrische Maschine (4) mit einem Rotor (2) mit zumindest zwei Magneten (1) nach einem der vorherigen Ansprüche.

6. Elektrische Maschine (4) nach Anspruch 5, **dadurch gekennzeichnet, dass** sie einen Stator (3) mit Polzähnen (31) aufweist, wobei die Anzahl ihrer Polzähne (31) ein Vielfaches von 3 ist.

## Claims

1. Rotor (2) for an electrical machine (4) having at least two magnets (1), which each have a first end (11) and a second end (12) and which have magnetization (110), wherein the magnetization (110) of said magnets at the first end (11) thereof is opposite to the magnetization (110) of said magnets at the second end (12) thereof, with the result that the magnets form in each case two magnetic poles (112, 113) which are aligned opposite to one another, wherein the magnetization (110) of the magnets (1) is at least weakened in each case in a region (15) between the first end (11) and the second end (12), or the magnets (1) do not have any magnetization (110) in the region (15), and wherein a space (17) is provided non-magnetically between two adjacent magnets (1),
**characterized in that**
the magnets (1) are arranged such that they have identical magnetic poles (112, 113) at their mutually adjacent ends (11, 12).

2. Rotor (2) according to Claim 1, **characterized in that** the magnetization (110) of the magnets (1) in each case decreases starting from the first end (11) and/or from the second end (12) in the direction of the region (15).

3. Rotor (2) according to any of the preceding claims, **characterized in that** the number of poles thereof is a multiple of two, in particular four.

4. Rotor (2) according to any of the preceding claims, **characterized in that** the space (17) is designed as an air gap.

5. Electrical machine (4) having a rotor (2) with at least two magnets (1) according to any of the preceding claims.

6. Electrical machine (4) according to Claim 5, **characterized in that** it has a stator (3) with pole teeth (31), wherein the number of pole teeth (31) of said stator is a multiple of three.

## Revendications

1. Rotor (2) pour une machine électrique (4) comprenant au moins deux aimants (1) qui présentent chacun une première extrémité (11) ainsi qu'une deuxième extrémité (12) et qui présentent une aimantation (110), leur aimantation (110) à leur première extrémité (11) étant opposée à leur aimantation (110) à leur deuxième extrémité (12), de sorte que les aimants forment à chaque fois deux pôles magnétiques de sens mutuellement opposés (112, 113), l'aimantation (110) des aimants (1) étant à chaque fois au moins affaiblie dans une région (15) entre la première extrémité (11) et la deuxième extrémité (12), ou les aimants (1), dans la région (15), ne présentant aucune aimantation (110) et un espace (17) entre deux aimants adjacents (1) étant prévu de manière non magnétique,
**caractérisé en ce que**
les aimants (1) sont disposés de telle sorte qu'ils présentent à leurs extrémités adjacentes l'une à l'autre (11, 12) des pôles magnétiques de même sens (112, 113).

2. Rotor (2) selon la revendication 1, **caractérisé en ce que** l'aimantation (110) des aimants (1) diminue à chaque fois à partir de la première extrémité (11) et/ou de la deuxième extrémité (12) dans la direction de la région (15).

3. Rotor (2) selon l'une quelconque des revendications précédentes, **caractérisé en ce que** son nombre de pôles est un multiple de deux, en particulier quatre.

4. Rotor (2) selon l'une quelconque des revendications précédentes, **caractérisé en ce que** l'espace (17) est réalisé sous forme d'entrefer.

5. Machine électrique (4) comprenant un rotor (2) comprenant au moins deux aimants (1) selon l'une quelconque des revendications précédentes.

6. Machine électrique (4) selon la revendication 5, **caractérisée en ce qu'**elle présente un stator (3) avec des dents polaires (31), le nombre de leurs dents polaires (31) étant un multiple de 3.
